# EUROPÄISCHE PATENTANMELDUNG

(11) **EP 4 685 376 A1**
(43) Veröffentlichungstag der Anmeldung: **28.01.2026**
(21) Anmeldenummer: 25191242.4
(22) Anmeldetag: 23.07.2025
(51) Int. Cl.: F16L 5/12, F16L 5/14, F16L 37/56, F16L 37/088

(54) **STECKVERBINDUNGSSYSTEM**

(30) Priorität: 24.07.2024 DE 102024121123
(71) Anmelder: Johannes Schäfer vorm. Stettiner Schraubenwerke GmbH & Co. KG, 35410 Hungen (DE)
(72) Erfinder: Forro, Norbert, 35447 Reiskirchen (DE)
(74) Vertreter: Haarpatent Patentanwälte Krämer Meyer

(57) **Zusammenfassung**

Bei einem Steckverbindungssystem (1) zur Verbindung von Leitungsabschnitten sind eine Grundplatte (2) mit einer Vielzahl von Durchführungsöffnungen (5) zur Durchführung von Leitungsabschnitten, mindestens eine mit der Grundplatte (2) verbindbare Gegenplatte (3), die eine Vielzahl von zu den Durchführungsöffnungen (5) korrespondierenden Öffnungen (6) aufweist und mehrere Stecker (4) vorgesehen, die jeweils einen Steckteil (7) und einen Anschlussteil (8) aufweisen, wobei der Steckteil (7) in eine der Öffnungen (6) der Gegenplatte (3) einsetzbar und durch eine der Durchführungsöffnungen (5) der Grundplatte (2) hindurchführbar ist, wobei der Anschlussteil (8) zur fluidischen Verbindung mit einem Leitungsabschnitt ausgebildet ist, und das Steckverbindungssystem (1) Haltemittel (9) aufweist, die zur formschlüssigen Fixierung des Steckteils (7) eines jeweiligen Steckers (4) vorgesehen sind.

## Beschreibung

Die Erfindung betrifft ein Steckverbindungssystem zur Verbindung von Leitungsabschnitten, welches insbesondere zur Durchführung pneumatischer oder fluidischer Leitungen durch eine Wandstruktur, ein Gehäuse oder eine Trennplatte geeignet ist.

Im Bereich der pneumatischen Versorgung von Nebenverbrauchern in Nutzfahrzeugen, etwa verstellbaren Sitzen oder Bedieneinheiten, werden häufig mehrere Kunststoffleitungen vom Fahrzeugrahmen in das Fahrerhaus geführt. Die Durchführung erfolgt typischerweise durch eine Wandstruktur, beispielsweise den Boden oder die Stirnwand des Fahrerhauses. Der verfügbare Bauraum in diesen Bereichen ist regelmäßig stark begrenzt, insbesondere im Bereich unterhalb der Lenksäule oder in unmittelbarer Nähe zu mechanischen Betätigungselementen wie Kupplungs- oder Bremspedal.

Zur Leitungsdurchführung werden herkömmlich Grundplatten eingesetzt, durch die die Leitungen hindurchgeführt werden. Die Fixierung der Leitungen erfolgt dabei meist durch aufgesetzte Gegenplatten, Adapter oder separate Befestigungselemente. Eine definierte Rastung einzelner Leitungen ist bei solchen Systemen in der Regel nicht vorgesehen. Stattdessen wird die Haltefunktion häufig über eine Flächenpressung zwischen Adapter und Platte oder über einfache Formschlüsse realisiert. Die Montage kann mehrere manuelle Schritte erfordern, unter Einbeziehung zusätzlicher Hilfselemente wie Dichtringe oder Einpresshilfen.

Bei Steckverbindungssystemen, die auf umlaufenden Haltenuten beruhen, ist es erforderlich, komplexe Geometrien im Spritzgusswerkzeug zu realisieren. Hierzu werden oftmals Faltkerne oder Schieber eingesetzt, um Hinterschnitte abzubilden. Dies führt zu erhöhten Werkzeugkosten, längeren Zykluszeiten und erhöhtem Aufwand bei der Werkzeugfreigabe. Die Demontage einzelner Leitungen ist bei solchen Systemen meist nur durch vollständiges Lösen der gesamten Verbindungseinheit möglich, was Wartungsarbeiten erschwert oder verzögert.

Der Erfindung liegt die Aufgabe zugrunde, ein Steckverbindungssystem zur Verbindung mehrerer Leitungsabschnitte bereitzustellen, das insbesondere eine kompakte, montagefreundliche und modular aufgebaute Durchführung mehrerer Leitungen ermöglicht, wobei eine zuverlässige Halterung der Stecker gewährleistet sein soll.

Gelöst wird die Aufgabe durch die Merkmale des Anspruchs 1. Bevorzugte Ausgestaltungen sind in den abhängigen Ansprüchen beschrieben.

Die Aufgabe wird erfindungsgemäß dadurch gelöst, dass ein Steckverbindungssystem zur Verbindung von Leitungsabschnitten bereitgestellt wird, welches insbesondere zur Durchführung pneumatischer oder fluidischer Leitungen durch eine Wandstruktur, ein Gehäuse oder eine Trennplatte geeignet ist. Das System ist insbesondere für den Einsatz in Kraftfahrzeugen oder Nutzfahrzeugen vorgesehen, beispielsweise zur Durchführung von Versorgungsleitungen vom Fahrzeugrahmen in das Fahrerhaus. Es kann jedoch auch in anderen technischen Bereichen verwendet werden, in denen mehrere Medienleitungen durch eine gemeinsame Schnittstelle geführt und lösbar verbunden werden sollen.

Das Steckverbindungssystem umfasst eine Grundplatte mit einer Vielzahl von Durchführungsöffnungen zur Durchführung von Leitungsabschnitten. Die Grundplatte ist als zentrales, in einer Öffnung oder Fläche anordenbares Bauteil ausgebildet, das die mechanische Basis für die Durchführungsstruktur der Stecker bildet. Die Durchführungsöffnungen erstrecken sich durch die Grundplatte hindurch und sind vorzugsweise so angeordnet, dass sie auf einer ersten Seite (z. B. der Außenseite) mit externen Leitungen und auf einer zweiten Seite (z. B. der Innenseite eines Gehäuses oder Fahrzeuginnenraums) mit internen Leitungsabschnitten verbindbar sind.

Mit der Grundplatte ist mindestens eine Gegenplatte verbindbar, welche ihrerseits eine Vielzahl von Öffnungen aufweist, die den Durchführungsöffnungen der Grundplatte zugeordnet und geometrisch aufeinander abgestimmt sind. Die Gegenplatte ist vorzugsweise auf einer der beiden Seiten der Grundplatte anordenbar und kann mehrere Funktionen übernehmen, insbesondere die Abdeckung von Öffnungsbereichen und die mechanische Aufnahme von Verbindungselementen.

Zur Herstellung der fluidischen Verbindung umfasst das System mehrere Stecker, die jeweils einen Steckteil und einen Anschlussteil aufweisen. Ein Stecker wird von einer sich axial erstreckenden Bohrung durchdrungen. Der Steckteil ist dazu ausgelegt, in eine der Öffnungen der Gegenplatte eingesetzt und anschließend durch eine der Durchführungsöffnungen der Grundplatte hindurchgeführt zu werden. Der Anschlussteil dient dem Anschluss eines äußeren oder inneren Leitungsabschnitts und kann beispielsweise als Rohranschluss, Schnellverbinder oder Bajonettverschluss ausgeführt sein. Die Stecker bestehen vorzugsweise aus Kunststoff oder Metall, insbesondere Messing.

Zur formschlüssigen Fixierung des Steckteils im eingebauten Zustand weist das Steckverbindungssystem Haltemittel auf. Diese Haltemittel können an der Gegenplatte und/oder an der Grundplatte vorgesehen sein oder alternativ - je nach Ausführungsform - auch vollständig am Steckteil ausgebildet sein. Sie dienen dazu, den jeweiligen Steckteil in einer definierten axialen Position zu halten, wobei dies durch einrastende, federnde oder formschlüssig ineinandergreifende Strukturelemente erfolgen kann. Die Haltemittel können beispielsweise als Rastnasen, Haltenuten, Rastkonturen oder als Kombinationen dieser Merkmale ausgeführt sein. Die Fixierung kann dabei ein- oder mehrstufig erfolgen, wobei insbesondere auch Zwischenpositionen zur Vorfixierung oder Dichtheitsprüfung realisierbar sind.

Das erfindungsgemäße Steckverbindungssystem erlaubt eine modulare und kompakte Bauweise bei gleichzeitig einfacher Montage. Ein wesentlicher Vorteil liegt darin, dass jeder Stecker einzeln und unabhängig montierbar ist, wodurch sich insbesondere bei Bandmontage oder in enger Einbaulage ein hoher Freiheitsgrad ergibt. Durch die zweiteilige Ausbildung mit separater Gegenplatte entfällt die Notwendigkeit zusätzlicher Adapter oder spezieller Gehäuseaufnahmen. Die Gegenplatte kann wahlweise vormontiert oder am Einsatzort mit der Grundplatte verbunden werden. Die Haltemittel sind bevorzugt so ausgeführt, dass sie mit einfachen Mitteln (z. B. axialem Einschieben) betätigbar und bei Bedarf auch lösbar sind, wobei auch werkzeuggeführte Demontagekonzepte vorgesehen sein können.

Das Steckverbindungssystem kann so gestaltet sein, dass es vollständig aus spritzgegossenen Kunststoffteilen besteht. Die Haltemittel sind dabei vorzugsweise so ausgeführt, dass sie ohne Hinterschnitte in einem einseitig entformbaren Spritzgusswerkzeug herstellbar sind, was die Herstellungskosten reduziert und die Prozesssicherheit erhöht.

In einer Ausgestaltung sind die Haltemittel zur Fixierung des Steckteils in Form von elastisch verformbaren Rastelementen ausgeführt, wobei zumindest ein Rastelement in einer Öffnung der Gegenplatte vorliegt und in die Öffnung hineinragt. Insbesondere ist zumindest ein Rastelement pro Öffnung vorgesehen. Es können auch mehrere Rastelemente pro Öffnung vorliegen. Die Rastelemente sind dabei so angeordnet und geformt, dass sie mit komplementären Konturen des Steckteils des Steckers zusammenwirken, insbesondere in Form einer Rastkerbe, einer ringförmigen Einkerbung oder eines Formansatzes am Steckteil. Die Rastelemente können beispielsweise aber nicht abschließend, als federnde Laschen, Federelemente mit Rastnasen, Vorsprünge oder segmentförmige Rippen ausgeführt sein, die beim Einführen des Steckers radial elastisch nachgeben und nach vollständigem Einschub des Steckteils in eine definierte Arretierposition zurückfedern. Dabei greifen sie formschlüssig in die zugeordneten Konturen des Steckteils ein und fixieren diesen in axialer Richtung gegenüber der Gegenplatte. Die Ausbildung der Rastelemente in der Gegenplatte hat insbesondere den Vorteil, dass sie vollständig integraler Bestandteil der spritzgegossenen Gegenplatte sein können. Dadurch entfällt die Notwendigkeit separater Befestigungselemente oder eingelegter Montageteile. Die Ausgestaltung erlaubt zudem eine werkzeuglose Montage der Stecker durch einfaches axiales Einschieben. Die Rückhaltekraft ist dabei abhängig von der Geometrie und Vorspannung der Rastelemente sowie von der Auslegung der Rastkontur am Steckteil.

Es ist bevorzugt, dass in der Öffnung der Gegenplatte mehrere axial zueinander beabstandete Rastelemente vorgesehen sind. Diese sind entlang der Längsachse der Öffnung angeordnet und wirken jeweils mit separaten Rastkonturen des Steckteils zusammen. Durch die Anordnung mehrerer Rastelemente in axialer Richtung kann der Steckteil bei der Montage zunächst in eine erste Rastposition eingeschoben werden, in der er gehalten, aber noch nicht vollständig verriegelt ist. Bei weiterem Einschub wird der Steckteil in eine zweite, axial versetzte Rastposition überführt, in der eine formschlüssige Endverriegelung erfolgt. Auf diese Weise kann eine zweistufige Arretierung realisiert werden, bei der die erste Raststufe beispielsweise als temporäre Einrast- oder Prüfposition dient und die zweite Stufe eine funktionssichere Betriebsverriegelung bildet. Ein technischer Vorteil dieser Anordnung liegt darin, dass der Montagevorgang durch die definierte Zwischenposition erleichtert wird und eine visuelle oder mechanische Kontrolle des Montagezustands erfolgen kann, bevor die endgültige Verbindung hergestellt wird. Darüber hinaus ermöglicht die Zweistufigkeit eine flexible Nutzung im Produktionsprozess, beispielsweise zur Durchführung einer Leckprüfung in der ersten Rastposition, bevor der Stecker endgültig verriegelt wird. Die Mehrfachanordnung der Rastelemente kann in der Herstellung durch gestufte Formkerne oder versetzt angeordnete Rastkonturen im Spritzgusswerkzeug realisiert werden, ohne dass bewegliche Formteile notwendig sind.

Alternativ oder zusätzlich zur axial gestaffelten Anordnung können mehrere Rastelemente konzentrisch um die Längsachse der jeweiligen Öffnung der Gegenplatte angeordnet sein. Dabei handelt es sich vorzugsweise um radial elastische Rastfinger oder Vorsprünge, die ringförmig oder segmentiert um den Umfang der Öffnung verteilt sind. Diese konzentrische Anordnung gewährleistet eine kreisförmig umlaufende formschlüssige Fixierung des Steckteils in radialer Richtung. Der Steckteil weist in diesem Fall eine umlaufende Rastkontur auf, etwa in Form einer Nut, einer umlaufenden Sicke oder eines umlaufenden Absatzes, in welche die Rastelemente bei vollständig eingeschobenem Zustand einrasten.

Die Rastelemente können beispielsweise als durchgehende ringförmige Lippe oder als diskrete Einzelsegmente ausgebildet sein, wobei die Herstellung jeweils durch geeignete Kerngeometrien im Spritzgusswerkzeug ohne Hinterschnitte ermöglicht wird.

In einer weiteren Ausgestaltung umfasst das Steckverbindungssystem eine zweite Haltenut, die zur ersten Haltenut axial beabstandet in der Grundplatte und/oder in der Gegenplatte angeordnet ist. Die Haltemittel sind dabei so ausgestaltet, dass sie zumindest eine erste Haltenut aufweisen, die entweder durch die Grundplatte und die Gegenplatte gemeinsam gebildet ist oder vollständig in der Grundplatte oder in der Gegenplatte ausgebildet ist. Der Steckteil des jeweiligen Steckers weist einen umlaufenden Haltering auf, der wahlweise in die erste oder in die axial beabstandete zweite Haltenut formschlüssig einrastbar ist. Durch die axiale Staffelung der Haltenuten ergibt sich eine zweistufige Rastfunktion, bei der der Steckteil zunächst in einer ersten Rastposition (Fangposition) fixiert werden kann, bevor er durch weiteren Einschub in eine zweite Rastposition (Verriegelungslage) überführt wird. Diese Ausgestaltung erlaubt sowohl geteilte Nutgeometrien - bei denen die erste und/oder zweite Haltenut aus Nutabschnitten in Grund- und Gegenplatte besteht - als auch vollständig einseitig ausgebildete Nuten, die ausschließlich in einem der beiden Bauteile vorgesehen sind. Dies ist insbesondere bei werkzeugtechnisch vereinfachten Varianten von Vorteil, da auf aufwendige Hinterschnitte verzichtet werden kann. Ein technischer Vorteil dieser Anordnung liegt in der Möglichkeit einer klar definierten, mechanisch zweistufigen Positionierung des Steckers, wodurch etwa eine Zwischenmontagestellung für Sichtkontrolle oder Dichtprüfung vor dem endgültigen Verriegeln bereitgestellt werden kann.

In einer weiteren Ausgestaltung weist der Steckteil mehrere axial beabstandete Haltenuten auf, in welche ein Haltering in unterschiedlichen Positionen einrastbar ist. Bei dieser Ausführungsform ist der Haltering nicht starr an einer festen Position des Steckteils vorgesehen, sondern entweder axial beweglich angeordnet oder elastisch vorgespannt, sodass er sich bei Montage durch die Gegenplatte in Richtung des Steckteils verschiebt und dabei in eine der auf dem Steckteil ausgebildeten Haltenuten einschnappt. Die Haltenuten sind als umlaufende, formschlüssige Vertiefungen oder Einstiche im Umfang des Steckteils ausgeführt und jeweils zur Anlage des Halterings geeignet. Der Haltering kann dabei in eine erste Haltenut zur temporären Fixierung (Fangposition) und in eine zweite, weiter axial versetzte Haltenut zur endgültigen Verriegelung gebracht werden. Durch diese Staffelung ergibt sich eine zweistufige Rastfunktion, bei der der Übergang von der ersten in die zweite Position durch gezielten Einschub des Steckers erfolgt.

In einer bevorzugten Ausgestaltung ist der Stecker aus Kunststoff oder aus Messing gefertigt. Die Gegenplatte als auch die Grundplatte sind vorzugsweise aus Kunststoff gefertigt. Die Verwendung von Kunststoff, insbesondere von spritzgussfähigen technischen Thermoplasten, bietet sich für Anwendungen mit moderaten Druck- und Temperaturanforderungen an. Geeignete Materialien umfassen beispielsweise glasfaserverstärktes Polyamid (PA-GF), Polyoxymethylen (POM) oder Polypropylen (PP). Alternativ kann der Stecker aus Messing bestehen, insbesondere wenn erhöhte Anforderungen an die mechanische Festigkeit, Temperaturbeständigkeit oder Medienresistenz bestehen.

Es ist vorteilhaft, dass die Gegenplatte derart ausgestaltet ist, dass sie mehrere Durchführungsöffnungen der Grundplatte gleichzeitig abdeckt und mehrere Stecker gleichzeitig aufnehmen und fixieren kann. Die Gegenplatte bildet hierbei ein Steckeraufnahmeelement, das als gemeinsames Halteelement für eine Gruppe benachbarter Durchführungsöffnungen dient. Dabei sind in der Gegenplatte mehrere Öffnungen vorgesehen, die in Anordnung und Geometrie auf die entsprechenden Durchführungsöffnungen der Grundplatte abgestimmt sind. Jeder dieser Öffnungen ist jeweils ein Stecker zugeordnet, welcher über die Gegenplatte in Position gehalten und - je nach Ausführung - durch formschlüssige Haltemittel verrastet wird. Die Gegenplatte kann dabei einstückig als starres Element ausgebildet sein oder modulare Aufnahmebereiche aufweisen, die je nach Bedarf angepasst oder kombiniert werden können.

In einer weiteren Ausgestaltung sind die Haltemittel derart ausgestaltet, dass sie durch ein äußeres Werkzeug lösbar sind, welches von außen auf die Gegenplatte aufsetzbar ist. Die Haltemittel sind dabei so angeordnet und ausgebildet, dass sie eine formschlüssige Fixierung des Steckteils gewährleisten, bei Bedarf jedoch auch eine gezielte Demontage einzelner Stecker ermöglichen. Für die Demontage kann ein spezielles Werkzeug vorgesehen sein, das von außen auf die Gegenplatte aufgesetzt wird, um die Haltemittel in eine Entriegelungsstellung zu überführen. Bei Rastelementen kann das Werkzeug beispielsweise als Spreizadapter ausgestaltet sein, der in die Öffnung eingeführt wird und die Rastelemente radial nach außen spreizt. Alternativ kann ein Gabel- oder Halbschalenwerkzeug eingesetzt werden, das auf die Stirnseite aufgesetzt wird und die formschlüssigen Halteelemente in Entriegelungsrichtung beaufschlagt. Bei Nut-Haltering-Systemen kann die Demontage durch axiales Zurückziehen des Steckers erfolgen, wobei die Haltenut durch Lösen der Gegenplatte oder durch ein Werkzeug, das den Nutbereich temporär erweitert oder den Haltering verformt, freigegeben wird. Ein technischer Vorteil dieser Ausgestaltung liegt darin, dass einzelne Stecker gezielt demontiert werden können, ohne dass die gesamte Gegenplatte oder das vollständige Steckverbindungssystem gelöst werden muss. Dies erleichtert Wartungsarbeiten, Anpassungen oder das Nachrüsten von Leitungspfaden erheblich.

In einer Ausgestaltung sind die Haltemittel zur Ausbildung einer zweistufigen Verrastung vorgesehen, wobei eine erste Rastposition als Fangposition und eine zweite Rastposition als Verriegelungsposition dient. Die zweistufige Rastfunktion erlaubt es, den Steckteil zunächst in einer definierten Zwischenstellung zu fixieren und anschließend durch weiteren Einschub in eine Endlage zu überführen, in der der Stecker vollständig verriegelt ist. Die technische Umsetzung der Zweistufigkeit kann auf verschiedene Weise erfolgen. In einer ersten Variante sind zwei axial zueinander beabstandete Haltenuten vorgesehen, die in der Grundplatte und/oder in der Gegenplatte angeordnet sind. Der Haltering des Steckers kann wahlweise in die erste oder zweite Haltenut eingerastet werden. Die erste Nut dient dabei als Zwischenposition (z. B. für Leckprüfung oder Ausrichtkontrolle), während die zweite Nut die endgültige Betriebsposition darstellt. In einer alternativen Ausführung ist ein oder sind mehrere elastisch verformbare Rastelemente vorgesehen, die mit zwei axial zueinander beabstandeten Rastkonturen des Steckteils zusammenwirken. Dabei kann der Steckteil beispielsweise zwei ringförmige Einrastabsätze oder Vertiefungen aufweisen, in welche die Rastelemente in definierter Reihenfolge einschnappen. Auch hier ergibt sich eine erste Einraststellung mit vorläufigem Halt und eine zweite Stellung mit erhöhter Rückhaltekraft für den endgültigen Einsatz. Ein technischer Vorteil der zweistufigen Rastfunktion liegt in der prozesstechnisch vorteilhaften Trennung zwischen Vorfixierung und Endverriegelung. So kann beispielsweise bei automatisierter Montage zunächst eine erste Position angesteuert werden, in der der Stecker korrekt ausgerichtet ist, bevor die vollständige Verbindung kraftgeführt oder manuell vollendet wird. Zudem bietet die erste Raststufe die Möglichkeit, eine Dichtheitsprüfung (z. B. Luftlecktest) durchzuführen, bevor der Stecker in die Endposition überführt wird.

Es ist vorteilhafterweise vorgesehen, dass die Gegenplatte zumindest ein Steckeraufnahmeelement mit mehreren Öffnungen umfasst. Das Steckeraufnahmeelement bildet eine strukturell abgegrenzte Funktionseinheit innerhalb der Gegenplatte, welche zur gezielten Aufnahme und Halterung mehrerer Stecker vorgesehen ist. Die Öffnungen des Steckeraufnahmeelements sind dabei in Anordnung und Geometrie auf die zugehörigen Durchführungsöffnungen der Grundplatte abgestimmt, sodass jeder Öffnung ein Stecker zugeordnet ist, der gemeinsam mit der Gegenplatte in Position gehalten wird. Die Haltemittel - etwa Rastelemente oder Nutsegmente - können hierbei integraler Bestandteil des Steckeraufnahmeelements sein. Das Steckeraufnahmeelement kann einstückig mit der Gegenplatte ausgeführt sein oder als separat herstellbares Modul, das an der Gegenplatte befestigt oder formschlüssig verrastet wird. In beiden Fällen dient das Element der strukturierten Gruppierung von Steckverbindungen und ermöglicht eine gezielte Leitungsbündelung. Die Öffnungen können rasterförmig, linear oder segmentiert angeordnet sein, abhängig von der Anzahl und dem räumlichen Verlauf der anzuschließenden Leitungen. Das Steckeraufnahmeelement kann darüber hinaus als Trägerstruktur für weitere Funktionselemente, wie Dichtlippen oder Codiermerkmale, ausgelegt sein.

Es ist weiterhin vorteilhaft, dass die Gegenplatte mehrere Steckeraufnahmeelemente mit jeweils mehreren Öffnungen umfasst, die über Verbindungsmittel miteinander verbunden sind. Jedes Steckeraufnahmeelement bildet eine funktionale Einheit zur Aufnahme und Fixierung mehrerer Stecker und ist in Anordnung und Geometrie auf einen definierten Bereich von Durchführungsöffnungen in der Grundplatte abgestimmt. Die Verbindung mehrerer solcher Elemente zu einer gemeinsamen Gegenplatte erfolgt über formschlüssige, kraftschlüssige oder stoffschlüssige Verbindungsmittel. Denkbar sind hierbei beispielsweise Rastverbindungen, Stecklaschen, Schraubverbindungen oder durchgehende Stege. Diese modulare Bauweise erlaubt es, die Gegenplatte aus mehreren, in sich geschlossenen Steckeraufnahmeelementen zusammenzusetzen, die je nach Systemanforderung getrennt gefertigt, gelagert und montiert werden können. Die Verbindungsmittel können dabei eine feste, nicht lösbare Verbindung ausbilden oder als lösbare Schnittstelle gestaltet sein, etwa um einzelne Abschnitte im Reparaturfall austauschen zu können. Unterschiedliche Fahrzeugvarianten oder Leitungskonfigurationen können durch gezielte Kombination vordefinierter Steckeraufnahmeelemente realisiert werden, ohne dass jeweils eine vollständig neue Gegenplatte konstruiert oder gefertigt werden muss. Zudem können die Verbindungsmittel der Steckeraufnahmeelemente so gestaltet sein, dass sie gleichzeitig zur Ausrichtung, Arretierung oder mechanischen Stabilisierung der gesamten Gegenplatte beitragen.

In einer weiteren Ausgestaltung umfasst die Gegenplatte Aufnahmemittel zur Aufnahme oder Durchführung von Befestigungsmitteln zur Befestigung an der Grundplatte. Die Aufnahmemittel sind konstruktive Strukturelemente der Gegenplatte, die dazu dienen, Befestigungsmittel wie Schrauben, Schnappverbindungen, Rastlaschen oder Bajonettverschlüsse aufzunehmen, durchzuleiten oder zu führen. Die Befestigungsmittel ermöglichen eine lösbare oder nicht lösbare Verbindung der Gegenplatte mit der Grundplatte, vorzugsweise in axialer Richtung. Die Aufnahmemittel können beispielsweise als Durchgangsbohrungen, Sacklöcher, Rasttaschen, Einrastfenster, Nut-Feder-Systeme oder klemmbare Aussparungen ausgeführt sein. Sie sind so angeordnet, dass sie in definierter Position auf korrespondierende Gegenstrukturen der Grundplatte ausgerichtet sind und dort eine sichere mechanische Verbindung herstellen können. Die Verbindung kann dabei zusätzlich zur Arretierung der Stecker oder ausschließlich zur Fixierung der Gegenplatte dienen. Hierdurch wird die Gegenplatte gegenüber der Grundplatte mechanisch fixiert, wodurch das gesamte Steckverbindungssystem stabilisiert wird. Gleichzeitig bleibt die Montage einfach, da die Gegenplatte z. B. nach dem Einsetzen der Stecker auf die Grundplatte aufgesetzt und durch wenige Befestigungspunkte fixiert werden kann.

Es ist bevorzugt, dass die Gegenplatte mittels Rast- oder Steckmitteln an der Grundplatte befestigbar ist, wobei die Rast- oder Steckmittel an der Grundplatte oder an der Gegenplatte angeordnet sind und mit korrespondierenden Flächen in Wirkverbindung treten. Die Rast- oder Steckmittel sind insbesondere als formschlüssige Verbindungselemente ausgebildet, die eine schnelle, wiederholbare und werkzeuglose Montage der Gegenplatte an der Grundplatte ermöglichen. Sie können als elastisch vorgespannte Rastnasen, Federzungen, Clips, Schnapphaken, Bajonettverbindungen oder konische Einsteckkonturen ausgebildet sein, die in zugeordnete Aufnahmen oder Hinterschnitte einrasten. Die Steckverbindung kann dabei so ausgelegt sein, dass die Gegenplatte durch einfaches Andrücken oder Einschieben in Montageposition gebracht und dort durch Einrasten der Verbindungsmittel fixiert wird. Je nach Anforderung kann die Verbindung als lösbar oder als nicht wieder lösbar ausgelegt sein. Hierdurch kann eine vereinfachte und beschleunigte Montage, insbesondere im Serienmontageumfeld oder bei schwer zugänglichen Einbaulagen erreicht werden. Die korrespondierenden Flächen zur Wirkverbindung können an der jeweils gegenüberliegenden Platte (Grund- oder Gegenplatte) als Einrasttaschen, Aufnahmeschlitze oder Konturen ausgebildet sein, die eine definierte Führungs- und Haltefunktion übernehmen. Die Gestaltung der Steckrichtung, Einführschräge und Rückhaltekraft kann dabei entsprechend der mechanischen Anforderungen angepasst werden.

Die Erfindung wird nachfolgend anhand eines Ausführungsbeispiels der Erfindung näher erläutert, das in der Zeichnung dargestellt ist. Es zeigen
- Figur 1: eine Draufsicht eines bevorzugten Steckverbindungssystems,
- Figur 2: einen Schnitt durch das Steckverbindungssystem entlang der Linie C-C gemäß Figur 1,
- Figur 3: einen Schnitt entlang der Linie E-E gemäß Figur 1,
- Figur 4: eine alternative Ausgestaltung des Steckverbindungssystems mit abgewandelten Haltemitteln,
- Figur 5: eine Ausgestaltung der Gegenplatte mit mehreren Steckeraufnahmeelementen und
- Figur 6: eine weitere Ausführungsform der Gegenplatte mit nur einem Steckeraufnahmeelement.

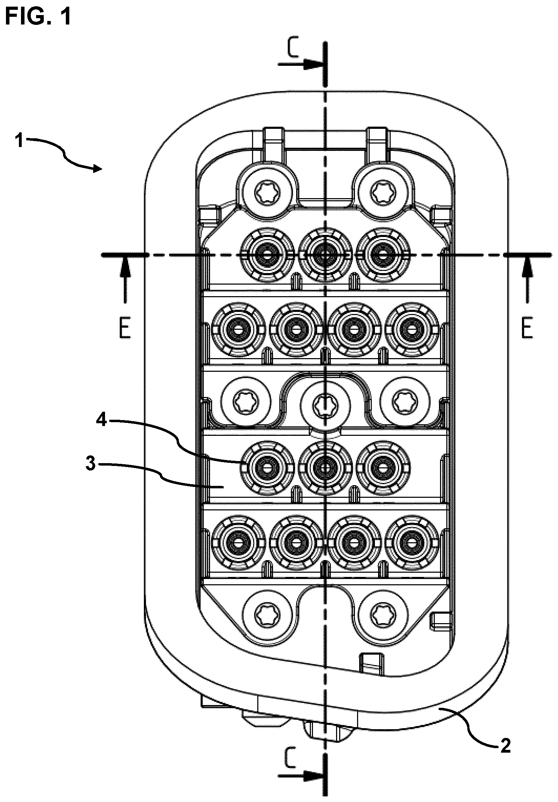

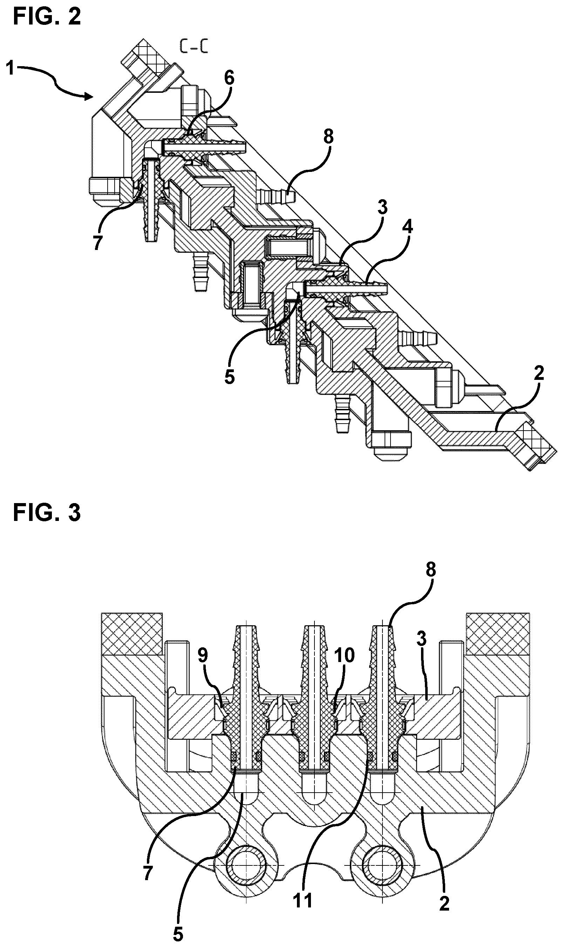

Figur 1 zeigt eine Draufsicht auf ein bevorzugtes Steckverbindungssystem 1 mit einer Grundplatte 2, einer darauf angeordneten Gegenplatte 3 sowie mehreren eingesetzten Steckern 4. Aufgrund der Darstellung in Aufsicht sind lediglich die Umrisse der Platten und die Lage der Steckeröffnungen erkennbar. Die Schnittlinien C-C und E-E markieren die Lage der in den Figuren 2 und 3 dargestellten Schnittebenen.

Figur 2 zeigt einen Schnitt durch das Steckverbindungssystem entlang der Linie C-C gemäß Figur 1. Die Darstellung verdeutlicht den grundsätzlichen Aufbau des Systems 1: Die Grundplatte 2 weist mehrere Durchführungsöffnungen 5 zur Durchführung von Leitungsabschnitten auf. Auf der Grundplatte 2 ist die Gegenplatte 3 angeordnet, die ihrerseits mehrere Öffnungen 6 aufweist, welche mit den Durchführungsöffnungen 5 der Grundplatte 2 korrespondieren. In den Öffnungen 6 sind mehrere Stecker 4 eingesetzt. Die Stecker 4 umfassen an einem Ende ein Steckteil 7 und am entgegengesetzten Ende ein Anschlussteil 8. Jeweils ein Steckteil 7 ist durch jeweils eine Öffnung 6 hindurchgeführt.

In den Öffnungen 6 der Gegenplatte 3 liegen Haltemittel 9 vor, die in dieser Ausführungsform als elastisch verformbare Rastelemente ausgebildet sind, die in die Öffnung 6 von deren Innenwandung hineinragen und in Figur 3 besser erkennbar sind. Sie greifen in komplementäre Rastkonturen 10 des jeweiligen Steckteils 7 ein und halten diesen in axialer Richtung formschlüssig. Dabei kann eine zweistufige Verrastung realisiert sein, bei der eine erste Rastposition als Fangposition und eine zweite Rastposition als Betriebsposition ausgebildet ist.

Nahe dem unteren Ende des Steckteils 7 ist ein O-Ring-Dichtungsmittel 11 angeordnet, das in eine Umfangsnut des Steckteils 7 eingesetzt ist. Im eingebauten Zustand liegt das Dichtungsmittel 11 dichtend an der Innenwand der Durchführungsöffnung 5 der Grundplatte 2 an und sorgt für eine medien- und druckdichte Abdichtung der Verbindung.

Figur 3 zeigt einen Schnitt entlang der Linie E-E gemäß Figur 1 und entspricht in Aufbau und Funktion der Darstellung in Figur 2. Auch hier sind Grundplatte 2, Gegenplatte 3 und eingesetzte Stecker 4 mit Haltemitteln 9 in Form von Rastelementen dargestellt, welche die Stecker 4 in axialer Richtung fixieren. Die Funktion des O-Ring-Dichtungsmittels 11 ist identisch zur Beschreibung in Figur 2.

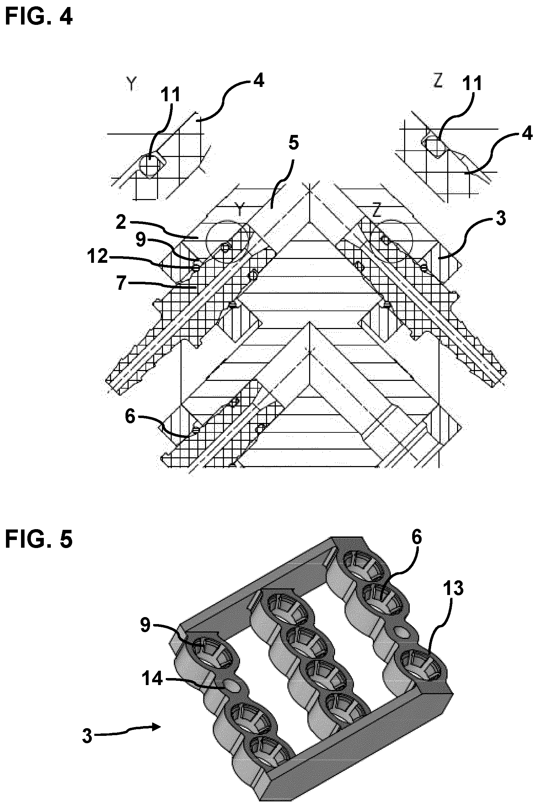

Figur 4 zeigt eine alternative Ausgestaltung des Steckverbindungssystems mit einem weiteren Haltekonzept für die Fixierung der Stecker. In Abweichung zu den Ausführungen gemäß den Figuren 2 und 3, bei denen die Haltemittel 9 in Form elastisch verformbarer Rastelemente an der Gegenplatte 3 ausgebildet sind, sind hier die Haltemittel 9 als formschlüssige Nut-Geometrien vorgesehen, die mit einem am Steckteil 7 angeordneten Haltering 12 zusammenwirken. Der Steckteil 7 weist einen axial verschieblich gelagerten oder federbelasteten Haltering 12 auf, der beim Einschub des Steckers 4 zunächst in eine erste Haltenut einrastet. Diese erste Rastposition dient als Fangposition, bei der der Stecker 4 vorläufig gehalten wird, etwa zur Ausrichtung oder zur Durchführung einer Dichtheitsprüfung. Wird der Steckteil 7 weiter in axialer Richtung in die Öffnung 6 eingeschoben, so wird der Haltering 12 aus der ersten Haltenut herausgedrückt und gleitet über eine zwischenliegende Fläche hinweg, bis er in eine zweite, axial beabstandete zweite Haltenut einrastet, welche die Verriegelungsposition bildet.

Die Haltenuten sind im dargestellten Ausführungsbeispiel an der Innenkontur der Grundplatte 2 und/oder der Gegenplatte 3 ausgebildet. Alternativ oder zusätzlich kann vorgesehen sein, dass sich die Haltenuten am Steckteil 7 selbst befinden, wobei der Haltering 12 gegenüber der Plattenstruktur in axialer Richtung verschoben wird. In dieser Variante ist der Haltering 12 beispielsweise als druckgeführtes oder elastisch verspanntes Element ausgeführt, das beim Einfügen des Steckers 4 nacheinander in zwei auf dem Steckteil 7 ausgebildete Haltenuten einschnappt.

Die vergrößerten Ausschnitte Y und Z zeigen Lage und Wirkung eines Dichtungsmittels 11. Dieses ist als O-Ring-Dichtungsmittel 11 ausgebildet und in eine Umfangsnut nahe dem unteren Ende des Steckteils 7 eingelegt. Im gesteckten Zustand liegt der O-Ring radial vorgespannt an der Innenwand der Durchführungsöffnung 5 der Grundplatte 2 an und gewährleistet eine medien- und druckdichte Abdichtung zwischen Stecker 4 und Durchgangsbohrung 5. Der vergrößerte Schnitt verdeutlicht die elastische Verformung des O-Rings im montierten Zustand sowie seine Lage relativ zur Rastmechanik.

Die dargestellte Ausgestaltung verdeutlicht, dass das Steckverbindungssystem 1 sowohl Haltenuten an der Plattenstruktur, nämlich Grundplatte 2 und/oder Gegenplatte 3 als auch Haltenuten am Steckteil 7 aufweisen kann, in die ein Haltering 12 gezielt einrastet. Dadurch können mehrere Rastpositionen entlang des Steckwegs realisiert werden, was insbesondere für schrittweise Montagen, automatisierte Prozessüberwachung oder unterschiedliche Einbaulagen vorteilhaft ist.

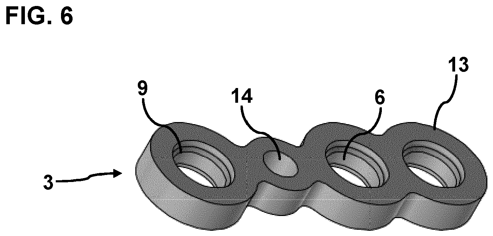

Figur 5 und Figur 6 zeigen Ausgestaltungen der Gegenplatte 3 mit mehreren Steckeraufnahmeelementen 13, die jeweils mehrere Öffnungen 6 zur Aufnahme von Steckern aufweisen. Die Steckeraufnahmeelemente 13 sind modular aufgebaut und können über Verbindungsmittel - beispielsweise Rast- oder Steckverbindungen - miteinander verbunden sein. Auf diese Weise kann die Gegenplatte 3 an unterschiedliche Konfigurationen der Grundplatte angepasst werden. Ferner sind als Rastelemente gestaltete Haltemittel 9 erkennbar, die in die Öffnungen 6 ragen und segmentiert und konzentrisch um die Längsachse der Öffnungen 6 angeordnet sind. Figur 6 zeigt eine Ausführungsform der Gegenplatte 3 mit nur einem Steckeraufnahmeelement 13, das mehrere Öffnungen 6 umfasst. In Figur 6 sind die Haltemittel 9 als umlaufende Nut in der Öffnung 6 der Gegenplatte dargestellt, die z. B. von einem Haltering des Steckers hintergriffen werden können. Ferner sind in Figur 5 und 6 Aufnahmen 14 zur Durchführung eines Befestigungsmittels erkennbar, welches zur Befestigung der Gegenplatte 3 an der Grundplatte 2 dient. Die Aufnahme kann beispielsweise als Durchgangsbohrung oder als Rastfenster für ein werkzeugloses Befestigungsmittel ausgebildet sein.

## Patentansprüche

1. Steckverbindungssystem (1) zur Verbindung von Leitungsabschnitten, umfassend eine Grundplatte (2) mit einer Vielzahl von Durchführungsöffnungen (5) zur Durchführung von Leitungsabschnitten, mindestens eine mit der Grundplatte (2) verbindbare Gegenplatte (3), die eine Vielzahl von zu den Durchführungsöffnungen (5) korrespondierenden Öffnungen (6) aufweist, mehrere Stecker (4), die jeweils einen Steckteil (7) und einen Anschlussteil (8) aufweisen, wobei der Steckteil (7) in eine der Öffnungen (6) der Gegenplatte (3) einsetzbar und durch eine der Durchführungsöffnungen (5) der Grundplatte (2) hindurchführbar ist, wobei der Anschlussteil (8) zur fluidischen Verbindung mit einem Leitungsabschnitt ausgebildet ist, und das Steckverbindungssystem (1) Haltemittel (9) aufweist, die zur formschlüssigen Fixierung des Steckteils (7) eines jeweiligen Steckers (4) vorgesehen sind.

2. Steckverbindungssystem (1) nach Anspruch 1, **dadurch gekennzeichnet, dass** die Haltemittel (9) in der Öffnung (6) der Gegenplatte (3) in Form von elastisch verformbaren Rastelementen vorliegen, die mit komplementären Konturen (10) des Steckteils (7) zusammenwirken, wobei zumindest ein Rastelement in einer Öffnung (6) der Gegenplatte (3) vorliegt und in die Öffnung (6) hineinragt.

3. Steckverbindungssystem (1) nach Anspruch 2, **dadurch gekennzeichnet, dass** mehrere axial voneinander beabstandete Rastelemente in der Öffnung (6) der Gegenplatte (3) vorgesehen sind.

4. Steckverbindungssystem (1) nach Anspruch 2 oder 3, **dadurch gekennzeichnet, dass** mehrere konzentrisch um eine Längsachse der Öffnung (6) herum angeordnete Rastelemente vorgesehen sind.

5. Steckverbindungssystem (1) nach Anspruch 1, **dadurch gekennzeichnet, dass** die Haltemittel (9) zumindest aus einer ersten Haltenut bestehen, die durch die Grundplatte (2) und die Gegenplatte (3) gemeinsam oder lediglich von der Grundplatte (2) oder der Gegenplatte (3) gebildet ist.

6. Steckverbindungssystem (1) nach Anspruch 5, **dadurch gekennzeichnet, dass** eine zweite Haltenut vorgesehen ist, die zur ersten Haltenut axial beabstandet in der Grundplatte (2) und/oder der Gegenplatte (3) angeordnet ist, und dass der Haltering (12) des Steckers (4) wahlweise in die erste oder die zweite Haltenut einrastbar ist.

7. Steckverbindungssystem (1) nach Anspruch 1, **dadurch gekennzeichnet, dass** auf dem Steckteil (7) mehrere axial beabstandete Haltenuten vorgesehen sind, in welche ein Haltering (12) in unterschiedlichen Positionen einrastbar ist.

8. Steckverbindungssystem (1) nach einem der vorhergehenden Ansprüche, **dadurch gekennzeichnet, dass** der Stecker (4) aus Kunststoff oder aus Messing besteht.

9. Steckverbindungssystem (1) nach einem der vorhergehenden Ansprüche, **dadurch gekennzeichnet, dass** mehrere Durchführungsöffnungen (5) der Grundplatte (2) gleichzeitig durch eine Gegenplatte (3) abgedeckt werden und mehrere Stecker (4) gleichzeitig aufgenommen und fixiert werden.

10. Steckverbindungssystem (1) nach einem der vorhergehenden Ansprüche, **dadurch gekennzeichnet, dass** die Haltemittel (9) derart ausgestaltet sind, dass sie durch ein äußeres Werkzeug lösbar sind, welches von außen auf die Gegenplatte (3) aufsetzbar ist.

11. Steckverbindungssystem (1) nach einem der vorhergehenden Ansprüche, **dadurch gekennzeichnet, dass** die Durchführungsöffnungen (5) der Grundplatte (2) gegenüber einer Plattenebene der Grundplatte (2) schräg verlaufen.

12. Steckverbindungssystem (1) nach einem der vorhergehenden Ansprüche, **dadurch gekennzeichnet, dass** die Haltemittel (9) zur Ausbildung einer zweistufigen Verrastung vorgesehen sind, wobei eine erste Rastposition als Fangposition und eine zweite Rastposition als Verriegelungsposition ausgebildet ist, und wobei entweder zwei axial zueinander beabstandete Haltenuten in der Grundplatte (2) und/oder der Gegenplatte (3) vorgesehen sind, oder ein Rastelement (9) vorgesehen ist, das in zwei axial zueinander beabstandete komplementäre Rastkonturen (10) des Steckteils (7) eingreift.

13. Steckverbindungssystem (1) nach einem der vorhergehenden Ansprüche, **dadurch gekennzeichnet, dass** die Gegenplatte (3) zumindest ein Steckeraufnahmeelement (13) mit mehreren Öffnungen (6) umfasst.

14. Steckverbindungssystem (1) nach Anspruch 13, **dadurch gekennzeichnet, dass** die Gegenplatte (3) mehrere Steckeraufnahmeelemente (13) mit jeweils mehreren Öffnungen (6) umfasst, die über Verbindungsmittel miteinander verbunden sind.

15. Steckverbindungssystem (1) nach einem der vorhergehenden Ansprüche, **dadurch gekennzeichnet, dass** die Gegenplatte (3) Aufnahmemittel (14) zur Aufnahme oder Durchführung von Befestigungsmitteln zur Befestigung an der Grundplatte (2) umfasst.

16. Steckverbindungssystem (1) nach einem der vorhergehenden Ansprüche, **dadurch gekennzeichnet, dass** die Gegenplatte (3) mittels Rast- oder Steckmitteln an der Grundplatte (2) befestigbar ist, wobei die Rast- oder Steckmittel an der Grundplatte (2) oder der Gegenplatte (3) angeordnet sind und mit korrespondierenden Flächen in Wirkverbindung treten.
